# EUROPEAN PATENT SPECIFICATION

(11) **EP 0 719 914 B1**
(45) Date of publication and mention of the grant of the patent: **02.05.2002**
(21) Application number: 95850231.2
(22) Date of filing: 18.12.1995
(51) Int. Cl.: F01N 7/08, F01N 1/02, B60K 13/04

(54) **Exhaust system for motor vehicles and an exhaust silencer forming part of the exhaust system**
Abgassystem für Kraftfahrzeuge und ein Schalldämpfer, der Bestandteil des Abgassystems ist
Système d'échappement pour moteur de véhicules et un silencieux faisant partie du système d'échappement

(30) Priority: 30.12.1994 SE 9404576
(43) Date of publication of application: 03.07.1996
(73) Proprietor: Scania CV AKTIEBOLAG, 151 87 Södertälje (SE)
(72) Inventor: Gustavsson, Anders, S-646 00 Gnesta (SE); Jönsson, Ola, S-141 44 Huddinge (SE)
(74) Representative: Goetz, Rupert, Dipl.-Ing.

(56) References cited:
- FR-A- 2 678 681
- GB-A- 915 406
- US-A- 3 968 854
- US-A- 4 972 921
- US-A- 5 183 977
- US-A- 5 321 214

## Description

The present invention refers to a motor vehicle and an exhaust silencer of the kind specified in the preamble to claims 1 and 6, respectively.

### State of the art

US-A-5,321,214 which forms the basis for claim 1 describes an automobile with an engine which is successively connected to an exhaust pipe, a silencer and a discharge pipe. The silencer is disposed between a side body and a side frame of the automobile and comprises a housing formed of two housing portions interconnected in a vertical plane. The housing is lined with a thermally insulating material through which an inner pipe having an infinite number of through holes extends. This silencer is disposed in a superior manner from the viewpoint of aerodynamic characteristic and design but its noise-damping capacity is limited to usage in cars.

US-A-3,968,854 which forms the basis for claim 6 describes a low noise level muffler with two complementary dished shell members forming an elongated shell shaped as a generally rectangular block. An exhaust pipe conducts exhaust gases into the top of the muffler. The gases flow through several chambers to an outlet port at the bottom of the muffler. The chambers are divided by partition walls having through holes or perforations formed therein. This muffler is particularly suited for small engines such as single cylinder combustion engines.

US-A-5,183,977 discloses another muffler assembly the housing of which is composed of two housing sections and has approximately the shape of a right-angled block. Each of the housing sections is dish-shaped and its interior is sub-divided by a likewise dish-shaped insert into an inner space within the respective insert and an outer chamber surrounding that insert. The housing sections and inserts have a planar flange each and are assembled in such a manner that all these flanges are interconnected at a common mating plane and the inner spaces within the two inserts form a common central chamber. Exhaust gases from a combustion engine are led, by an exhaust pipe, through the outer chamber of a first one of said housing sections into said central chamber which acts as a first expansion chamber. From thence, the exhaust gases flow through a first baffle pipe into the outer chamber of the second housing section and, further, through a second baffle pipe arranged at right angles to said mating plane, into the outer chamber of said first housing section which is connected to atmosphere by a tail pipe.

From US-A-4,972,921 a muffler of relatively large size for internal combustion engines is known, which comprises a hollow shell, assembled from half sections, at least one perforated baffle plate and exhaust inlet and outlet ports. The baffle plate is rigidly integrated in the hollow shell and various interlocking and elastic members are rigidly interconnected between the baffle plate and the inside walls of the hollow shell to reduce development or transmission of vibration.

From GB-A-915,406 an exhaust silencer comprising at least two serially connected damping chambers is known, which are interconnected by means of a tube acoustically coupled, by way of apertures associated with short tubular members, with at least one of the chambers. The tube provides damping by means of resonance.

Trucks and other types of heavy-duty utility vehicles have a separate vehicle frame, i.e. a frame comprising two elongated sidebeams which are connected to one another by a number of transverse beams. A drive unit with a combustion engine is mounted on the vehicle frame, and the exhaust outlet from the engine communicates, via a first exhaust line, with the exhaust inlet to at least one exhaust silencer, the exhaust outlet of which communicates via a second exhaust line with the atmosphere surrounding the vehicle.

The general background to the problem here concerned of exhaust noise damping for motor vehicles includes the fact that noise from all kinds of sources forms a major environmental problem in today's society. Since heavy motor vehicles in particular, such as trucks, constitute a significant noise source in this context, there has been intensive work in the truck industry on various ways of reducing vehicle noise release. This work has been directed, inter alia, at developing ever more effective exhaust silencers and at noise-damping enclosure of the various noise sources.

In addition to adopting design solutions which cause as little noise generation as possible, truck manufacturers are compelled to build their vehicles so that the various components of the latter are easy to fit and accessible for removal and servicing and so that there is sufficient space for any possible extra equipment in or near the vehicle frame, and of course also so that it is possible to mount superstructures such as load platforms, covered bodies or the like on the frame while at the same time maintaining sufficient vehicle ground clearance.

For an exhaust silencer to provide effective noise damping, it must have a relatively large volume, which causes space problems in that the silencer undoubtedly encroaches on the limited space available for the equipment and components which are required on a truck. In order to use the available space effectively, truck manufacturers have previously often found themselves obliged to use one or more relatively long cylinder-shaped silencers fitted either in a vertical position behind the vehicle cab or in a horizontal position under the vehicle.

Where such elongated cylinder-shaped silencers are used, it is inherently also possible to fit them on the outside of the vehicle frame instead of behind the vehicle cab or under the vehicle. Attempts have also been made to solve the space problem in this manner, but the relatively great length of such cylinder-shaped silencers still makes them relatively difficult to fit. A further problem in this context is also that it becomes necessary to fit the silencer or silencers at different points on different types of vehicle, since the latter are provided with different types of space-limiting equipment. This has resulted in a vehicle manufacturer today having to hold stocks of a large number of exhaust pipe variants and different types of mounting devices for them, and such stockholding is both space-demanding and expensive. Even where there is space for fitting the silencer on the outside of the vehicle frame, it has previously proved necessary to place the silencer at a variety of points and in a variety of directions on the various types of vehicle made by a manufacturer.

For a standardised exhaust silencer design of a certain type and size to be usable on motor vehicles of various types and sizes which have a frame, it is thus necessary, inter alia for space reasons, that the silencer be of compact design which makes it possible to achieve effective sound damping for various engine types and power outputs. For cost reasons, such a standardised silencer design must also be such that its constituent constructional elements and components are easy to manufacture and facilitate simple and rapid assembling of the silencer.

However, known silencers e.g. the muffler described in US patent 3,968,854, are of relatively complicated design with many constituent parts, which means that assembling such a silencer will comprise many stages, thereby making it both time-consuming and expensive.

Swedish patent application 351 696 describes a non-cylindrical silencer for combustion engines which consists of a hollow housing composed of two mutually identical and generally cup-shaped housing sections made of stamped sheetmetal. Since the silencer housing in that case exhibits an oval longitudinal section (see Figs. 1-2 and Figs. 6-7 in the specification of the aforesaid patent application), it is not possible with such a silencer to utilise effectively the available space up to a vertical planar side surface of the vehicle frame.

### Objects of the invention

The primary object of the invention is to provide for motor vehicles which have a vehicle frame an exhaust silencer which is so designed that it can without problems be placed at substantially the same point in the area near the outside of the vehicle frame, advantageously behind the driver's cab, on a large number of different types of vehicle, so that one and the same silencer design can be used for various models in a production range. The silencer has to provide a maximally optimised noise-damping capacity. The silencer has also to be easy to manufacture and easy to fit in the area of the vehicle frame. The invention also aims at providing a universally usable design of exhaust silencer intended for trucks. Such an exhaust silencer results in significant standardising advantages with regard to silencer design and location, thereby substantially reducing the need to hold stocks of exhaust pipes of different designs and hence making such stockholding less expensive.

The invention also has the object of providing a compact silencer which occupies the least possible amount of space near the vehicle frame, is easy to manufacture and facilitates uncomplicated and rapid assembling of the constituent separate constructional elements of the silencer.

### Description of the invention

The objects mentioned above are achieved according to the invention by a motor vehicle and an exhaust silencer of the kind indicated in the introduction, which motor vehicle or silencer exhibits the features indicated in the characterising part of patent claims 1 and 6, respectively.

The dependent claims set out further features for more developed forms of the exhaust system and exhaust silencer according to claims 1 and 6.

### Brief description of the drawings

The exhaust silencer according to the invention will now be described below and explained further with reference to the embodiments depicted in the attached drawings.

The drawings are as follows:
- Fig.1: shows a side view of the main components of an exhaust system near the outside of the beam frame of an only partly depicted motor vehicle of truck type;
- Fig.2: shows a plan view of the area of a vehicle shown in Fig.1;
- Fig.3: shows a section through an only schematically depicted embodiment of an exhaust silencer corresponding in principle to that shown in Figs.1-2, at the section line III-III in Fig.1;
- Fig.4: shows a section through the silencer in Fig.3 at the section line IV-IV in Fig.3;
- Fig.5: shows a section through the silencer in Fig.3 at the section line V-V in Fig.3;
- Fig.6: shows in side view (cf. Fig.1) a more commercial version of an exhaust silencer according to the invention;
- Fig.7: shows a view (cf. Fig.3) of the silencer in Fig.6 as seen in the direction of the arrow F in Fig.6;
- Fig.8: shows the upper housing section in Fig.6 as seen from below (in the direction of the arrow B) at the dividing plane (mating plane) D-D in Fig.6;
- Fig.9: shows finally the lower housing section in Fig.6 as seen from above (in the direction of the arrow A) at the dividing plane D-D in Fig. 6, and
- Fig. 10: shows a perspective view of the exhaust silencer in Fig.1 and the partly depicted beam frame.

### Description of embodiments

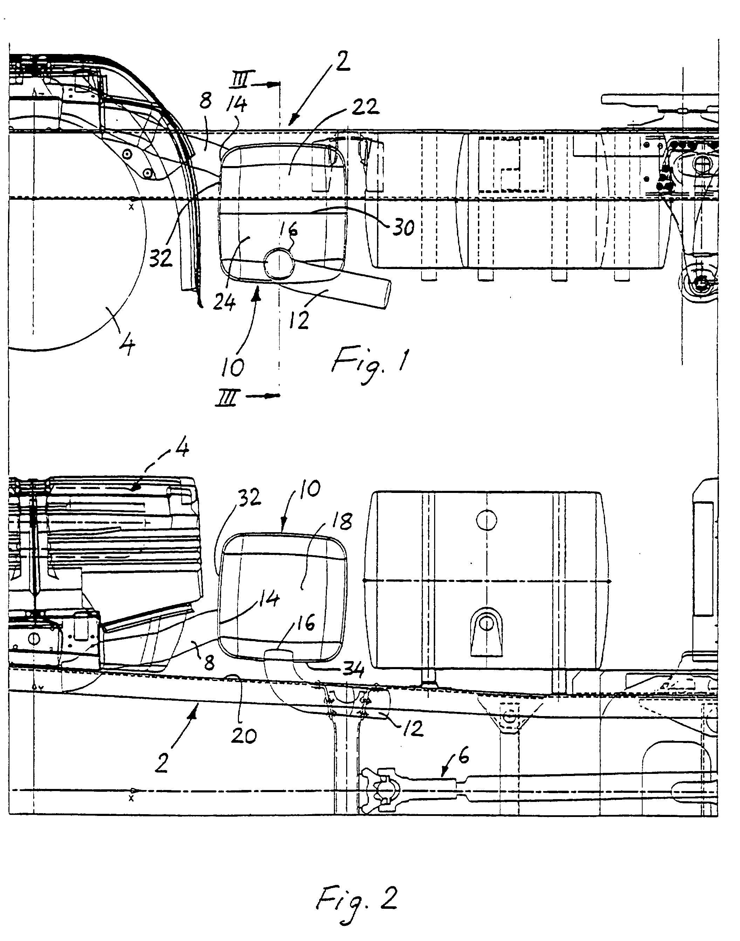

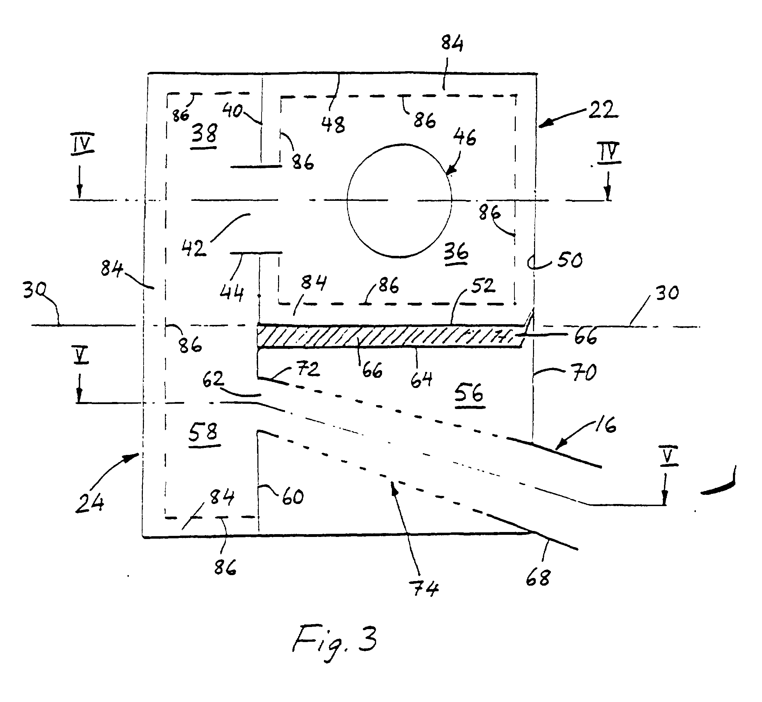

Fig.1 and Fig.2 show in side view and plan view respectively a section of the separate beam frame 2 of an otherwise only schematically depicted heavy-duty truck. The section depicted of the beam frame extends rearwards from the here undepicted driver's cab of the vehicle which is situated in the area above and just behind the front wheels 4 of the vehicle, only one of which appears in the drawings. Fig.2 also shows a universal shaft portion 6 which forms part of the truck driveline. The exhaust gases from the truck's undepicted drive engine, which is a combustion engine, are led away from the engine exhaust outlet via an exhaust system. This exhaust system comprises a first exhaust line 8 (in the form of a forward exhaust pipe), a substantially cubic exhaust silencer 10 connected thereto, and a second exhaust line 12 in the form of a rear exhaust pipe leading from the exhaust silencer. The exhaust gases from the engine exhaust outlet are led through the first exhaust line 8 to an exhaust inlet 14 of the silencer, and the exhaust gases from an exhaust outlet 16 of the silencer are led through the second exhaust line 12 to the atmosphere surrounding the vehicle. The exhaust system of the vehicle may also be conceived as including one or more further silencers (not here depicted) and an exhaust cleaner which is advantageously placed upstream from the exhaust silencer 10 or is integrated in it.

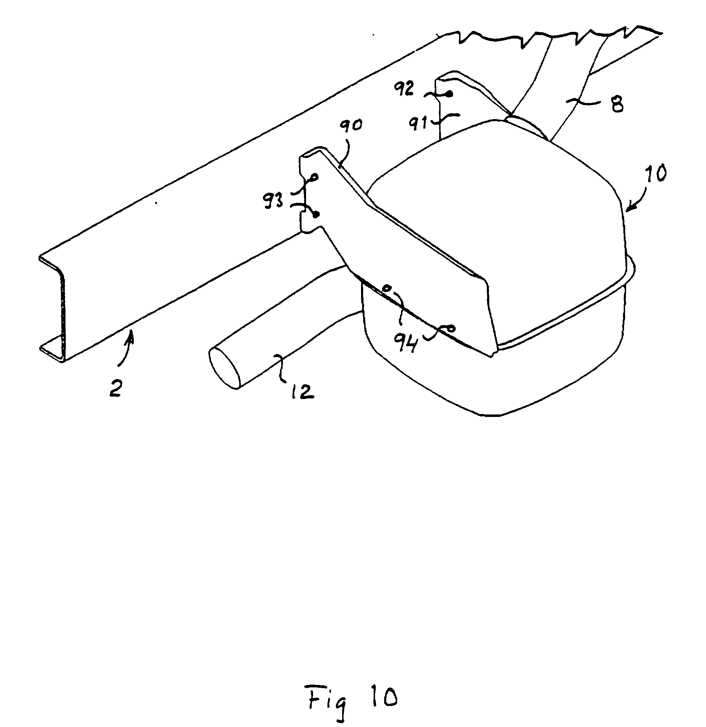

Fig.10 shows the exhaust silencer 10 connected to the beam frame 2 by brackets 90,91. The brackets 90,91 are connected to the beam frame by bolted connections 92,93 and to the exhaust silencer 10 by bolts 94 which cooperate lockingly with undepicted weld nuts which are integrated in the wall of the exhaust silencer 10.

The exhaust silencer 10 includes a hollow housing 18 which, as may be seen in Figs.1-2, has largely the shape of a right-angled block with rounded corners. In the version depicted the right-angled block is substantially equilateral and therefore resembles a cube. The silencer is fitted in the area of the vehicle's beam frame 2 in such a way that an upper wall area of the silencer housing 18 is situated alongside a vertical side surface 20 of the vehicle frame 2 which faces outwards away from the longitudinal axis of the frame 2. As may be seen in Figs.1, 6 and 7, the silencer housing 18 is composed of two housing sections which are of substantially equal size, viz. an upper housing section 22 and, situated beneath the latter, a lower housing section 24. In an alternative embodiment it is possible to use more housing sections, although such a solution becomes more complex. The two housing sections 22, 24 thus have the shape of parallelepipedic "troughs" which, at peripheral connecting edge flanges 25 and 28, are connected co one another at a mating or dividing plane 30, which is substantially parallel with the horizontal plane of the vehicle frame 2 and with the end plane of the right-angled block. It is advantageous for the housing sections 22 and 24 to be joined together by welded connections at the mutually connecting peripheral flanges 26 and 28. As the two housing sections 22,24 are trough-shaped, it is very easy to make them, e.g. by a pressing process or the like. The trough-shaped housing sections 22,24 also facilitate uncomplicated and rapid assembling of the silencer, since the constituent separate constructional elements of the silencer can very easily be fitted in the relatively wide opening of the respective trough-shaped housing sections 22,24, followed by fitting the sections 22,24 to one another.

As may be seen in Figs.1-2 and 6-7, the exhaust inlet 14 of the silencer 10 is arranged in the upper section 22 of the silencer housing 18, in the forward end wall 32 of the housing, and the exhaust outlet 16 of the silencer is arranged in the lower housing section 24 on a side 34 which faces towards the vehicle frame 2.

The principles of the constructional design of the exhaust system silencer 10 will now be clarified and described further with reference to the embodiment schematically depicted in Figs. 3-5.

As may be seen in Fig.3, the upper housing section 22 includes not only a larger chamber 36 which occupies more than one-half of the volume of the upper section 22 but also a smaller chamber 38 which is separated from the larger chamber 36 by a first dividing wall 40 with one throughflow aperture 42 by which the chambers 36, 38 are in mutual communication. The throughflow aperture in the dividing wall 40 is formed by a pipe element 44 running substantially perpendicularly through the wall.

The exhaust inlet 14 of the exhaust silencer 10 comprises an inlet pipe 46 fastened in the upper housing section 22. This inlet pipe 46 extends from the outside of the housing 18 in through the forward end wall 32 of the upper housing section 22 and continues into the larger chamber 36 so as to be mainly parallel with the dividing wall 40 and situated at a distance from the other boundary walls 48, 50 and 52 of the chamber 36. The inlet pipe 46 runs substantially straight through the larger chamber 36 and over at least one-half of the length of the chamber 36. The pipe element 44 is situated level with the orifice 54 of the inlet pipe 46 in the chamber 36.

The lower housing section 24 includes in its turn not only a larger chamber 56 which occupies more than one-half of the volume of the lower housing section 24 and which is situated directly beneath the larger chamber 36 of the upper housing section 22, but also a smaller chamber 58 which is separated from the chamber 56 by a second dividing wall 60. In the wall 60 there is one throughflow aperture 62 whereby the chambers 58 and 56 are in mutual communication. The chamber 56 is separated from the larger chamber 36 of the upper housing section 22 by a substantially horizontal double wall structure composed of the lower boundary wall 52 of the chamber 36 and an element of upper boundary wall 64 of the chamber 56 which is arranged beneath the lower boundary wall 52 of the chamber 36. This double wall structure also includes absorbent material 66, such as glass fibre mat or mineral wool, placed between the boundary walls 52 and 64.

At the top, the smaller chamber 58 of the lower housing section 24 is in direct open communication with the smaller chamber 38 of the upper housing section 22. The larger chamber 36 of the upper housing section 22 has approximately the same volume as the combined volume of the smaller chambers 38 and 58 of the upper and lower housing sections, so these chambers are in direct open communication with one another and together form a mid-range chamber in the silencer housing 18.

The exhaust outlet 16 of the exhaust silencer 10 comprises an outlet pipe element 68 which is fastened in the lower housing section 24 and which extends from the outside of the housing into the chamber 56 through the boundary wall 70 of the housing section 24 on the side 34 of the housing which faces towards the vehicle frame 2. The outlet pipe element 68 is situated substantially centrally on the lower part of the lower housing section 24 and is directed downwards and inwards towards the centre of the vehicle.

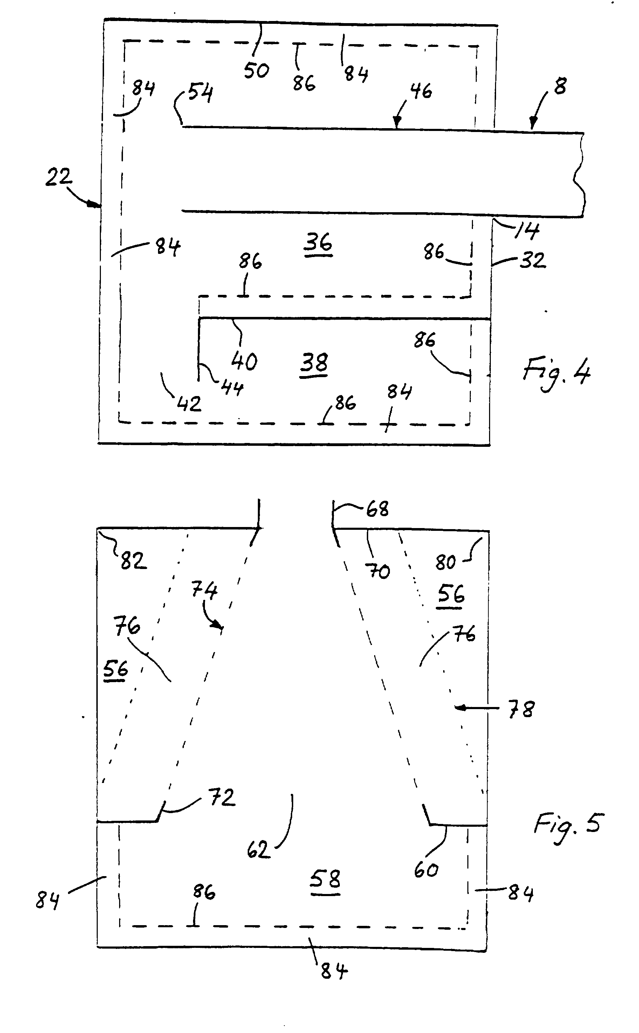

As may be seen in Fig.3 in combination with Fig.5, the throughflow aperture 62 in the second dividing wall 60 is formed by a pipe element 72 which is set in the wall 60 and is substantially rectangular in cross-section. This pipe element is in communication with the outlet pipe element 68 via a flow passage 74 which is directed obliquely downwards into the chamber 56 and which consists of a flow duct with perforated duct wall. An enclosing relatively thick layer of absorbent material 76, such as glass wool or other mineral wool, enclosing the flow passage 74 is arranged on the outside of the duct wall (see Fig.5). The pipe element 72, which is substantially rectangular in cross-section and is set in the wall 60, has approximately the same hydraulic diameter as the outlet pipe element 68. For achieving effective sound damping in the chamber 56 it is essential that the absorbent material 76 abuts properly against the outside of the perforated duct wall of the passage 74. An advantageous way of achieving this is by means of expanded metal mesh 78 which prevents the absorbent material 76 from blowing down into the corners 80 and 82 of the chamber 56.

As may be seen in Figs.3-5, not only the larger chamber 36 of the upper housing section 22 but also the smaller chambers 38 and 58 of the lower housing section have the insides of their boundary walls lined with absorbent material 84, such as glass fibre wool, which is held in place beside the boundary walls by perforated inner wall sheets 86 arranged at a certain distance within the insides of the boundary walls so as to provide space for the absorbent material 84. The whole of the housing 18 of the exhaust silencer is made of sheetmetal, i.e. the boundary walls of the chambers 36, 38, 58 and 56, the inlet pipe 46, the outlet pipe element 68, the pipe elements 44 and 72 and the flow passage 74 are made of suitable sheetmetal.

The following may be observed concerning the sound damping function of the exhaust silencer 10. As seen in the direction of flow of the exhaust gases, the larger chamber 36 of the upper housing section 22 constitutes the silencer's first sound-damping chamber, which damps the low-frequency portion of the exhaust noise. The silencer's second sound-damping chamber consists of the two mutually adjacent smaller chambers 38 and 58 which together constitute the silencer's mid-range chamber, which is tuned with respect to the first chamber 36. The third sound-damping chamber of the exhaust silencer 10 is the larger chamber 56 of the lower housing section 24, which constitutes an absorbing element dealing with the high-frequency portion of the exhaust noise.

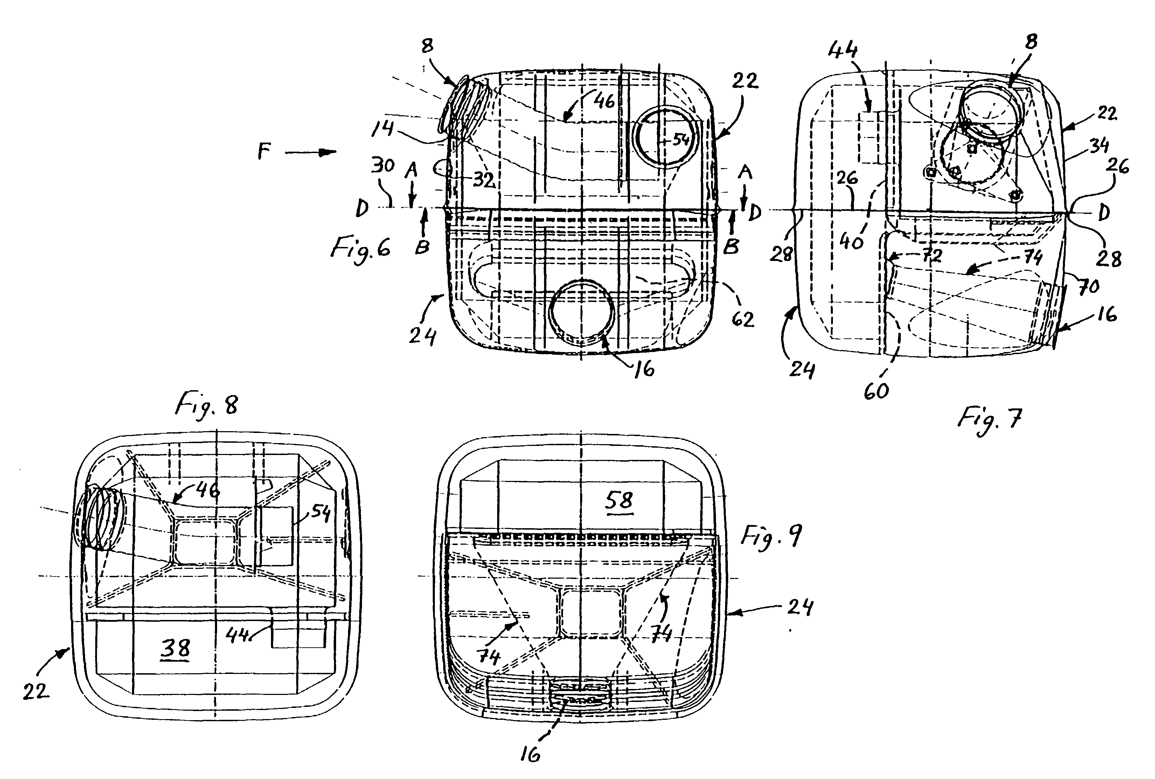

The large cross-section of the base-noise chamber 36 combines with the absorbent (the absorbent material 84) on the inside of the boundary walls of the chamber 36 to make the damping effect of the chamber 36 extremely broad so that it also functions down in the ignition frequency range. The throughflow aperture 42, i.e. the pipe element 44, forms the exhaust outlet from the chamber 36, and this outlet should be at approximately the same height as the orifice 54 of the inlet pipe 46. In the version depicted in Figs. 6-9, however, the exhaust outlet 42 from the chamber 36 is situated somewhat higher than the orifice 54 of the inlet pipe 46. The diameter of the exhaust outlet pipe 44 affects the base noise and is a compromise between base noise and backpressure. The absorbent on the inside of the walls of the chamber 36 not only reduces the orifice noise but also reduces casing-radiated noise and, not least, the crosstalk between the various chambers in the silencer. The double-wall structure 52,64 with intermediate absorbent material 66 between the base-noise chamber 36 and the treble-noise chamber 56 is adapted specifically for reducing crosstalk between these two chambers 36 and 56.

The sound damping in the mid-range is accomplished by means of the inlet pipe 46 and by the fact that the mid-range chamber 38,58 has approximately the same volume as the base-noise chamber 36 and by the fact that a tuned pipe element 44 is inserted between the chambers 36 and 38,58. The absorbent 84 on the insides of the outer walls of the double chamber 38,58 counteracts the stationary waves in the chamber which might otherwise disrupt the sound-damping function of the chamber. Casing radiation and crosstalk are also reduced in the same manner as for the base-noise chamber 36.

The silencer's high-frequency damping is achieved as described above in the treble chamber 56. The width of the cubic silencer housing 18 is utilised by making the exhaust inlet to the chamber 56 in the form of a relatively low horizontal gap 62 (the rectangular pipe element 72) which nevertheless has approximately the same hydraulic diameter as the circular outlet pipe element 68. The slope of the perforated flow passage 74 is in this case greater so that the outlet pipe element with the connecting exhaust line 12 will be clear of the front axle spring mountings.

## Claims

1. Exhaust silencer (10) which is for connection to a combustion engine and has a housing (18) with an inlet (14) and an outlet (16), which housing (18) is composed of two housing sections (22,24) which are of substantially equal size, and the housing (18) having largely the shape of a right-angled block with several chambers (36, 38, 56, 58),
**characterised in that** one of the housing sections (22,24) is partially occupied by a base chamber (36) and the other is partially occupied by a treble chamber (56) and that the residual volumes of the two housing sections (22,24) together form a mid-range chamber (38,58), the silencer's inlet (14) leads into the base chamber (36) and its outlet (16) leads out from the treble chamber (56).

2. Exhaust silencer according to claim 1,
**characterised in that** the housing sections (22,24) have a common mating plane (30) situated substantially parallel with the end plane of the right-angled block.

3. Exhaust silencer according to claim 1 or 2,
**characterised in that** the inlet (14) in the base chamber (36) includes a pipe (46) with open pipe end (54) which discharges in the base chamber (36), which pipe (46) runs substantially straight through the base chamber (36) for at least one-half of the length of the latter.

4. Exhaust silencer according to claim 3,
**characterised in that** the base chamber (36) and the mid-range chamber (38,58) have, substantially perpendicular to the run of the pipe (46) and in the vicinity of the pipe end (54), one throughflow aperture (42) embracing a pipe element (44) which passes through a dividing wall (40) common to the aforesaid chambers (36,38,58), manifestly protrudes into the mid-range chamber (38,58) and is situated level or almost level with the orifice (54) of the inlet pipe (46).

5. Exhaust silencer according to claim 1 or 2,
**characterised in that** between the mid-range chamber (38,58) and the treble chamber (56) is arranged a dividing wall (60) with one throughflow aperture (62) formed by a pipe element (72) which is of substantially rectangular cross-section and is inserted in the dividing wall (60), and that in the treble chamber (56) is arranged a flow passage (74) which connects the pipe element (72) to the outlet pipe element (68) and consists of a flow duct with perforated duct wall, preferably made of sheetmetal, on the outside of which is arranged a relatively thick layer or coat of absorbent material (76), such as glass wool or other mineral wool, surrounding the duct.

6. Exhaust silencer according to claim 5,
**characterised in that** the pipe element (72) of substantially rectangular cross-section is inserted in the dividing wall (60) at a higher level than the level at which the outlet pipe element (68) is fastened in the sidewall (70) of the silencer, and the pipe element (72) has approximately the same throughflow area as the outlet pipe element (68).

7. Exhaust silencer according to claim 1 or 2,
**characterised in that** the base chamber (36) has approximately the same volume as the combined volume of the smaller chambers (38,58) of the upper and lower housing sections (22,24), which smaller chambers (38,58) are in direct open communication with one another and together constitute the mid-range chamber in the silencer housing (18).

8. Exhaust silencer according to claim 2,
**characterised in that**
a first dividing wall (40) is arranged in a first housing section (22) between the base chamber (36) and a first part (38) of the mid-range chamber (38,58),
and a second dividing wall (60) is arranged in a second housing section (24) between the treble chamber (56) and a second part (58) of the mid-range chamber (38,58),
both said dividing walls (40,60) being in a common plane perpendicular to the common mating plane (30) of the housing sections (22,24).

9. Motor vehicle comprising a vehicle frame (2), preferably a separate beam frame, on which is mounted a drive unit comprising a combustion engine having at least one exhaust out-let which communicates via a first exhaust line (8) with the exhaust inlet (14) of at least one exhaust silencer (10) according to claim 1 which has an exhaust outlet (16) adapted to communicate with the surrounding atmosphere via at least a second exhaust gas line (12), the exhaust silencer (10) comprising the hollow housing (18) which is arranged in the area of the vehicle frame (2), with one wall area of the silencer housing (18) situated alongside a vertical side surface (20) of the vehicle frame (2) which faces outwards away from the longitudinal axis of the frame (2),
**characterised in that** the base chamber (36) for damping the exhaust noise frequencies in the base range is accommodated in the first housing section (22) which is the upper housing and the treble chamber (56) for damping the exhaust noise frequencies in the treble range is accommodated in the lower housing section (24) which is the lower housing situated beneath the upper housign each of these chambers (36,56) occupies more than one-half of the volume of the upper or lower housing section (22,24), respectively, the residual volumes of the two housing sections (22,24) together form the mid-range chamber (38,58).

10. Motor vehicle according to claim 9,
**characterised in that** the exhaust silencer housing (18) is at least approximately cubic and the lower housing section (24) is connected to the upper housing section (22) at a mating plane (30) which is situated substantially parallel with and below a lower horizontal boundary plane of the vehicle frame (2).

11. Motor vehicle according to claim 9 or 10,
**characterised in that** the treble chamber (56) has an outlet pipe element (68) situated substantially centrally on the lower part of the lower housing section (24) and directed obliquely downwards and inwards towards the centre of the vehicle.

12. Motor vehicle according to claim 9 or 10,
**characterised in that** the exhaust inlet (14) to the exhaust silencer (10) is arranged in the upper section (22) of the silencer housing (18) in the area of a forward end wall (32) of the housing (18) as seen in the running direction of the vehicle, while the exhaust outlet (16) from the exhaust silencer (10) is arranged in the lower section (24) of the silencer housing (18) on a side (34) of the housing (18) which faces towards the vehicle frame (2).

13. Motor vehicle according to claim 10 or 12,
**characterised in that** the upper housing section (22) contains a larger chamber (36) and a smaller chamber (38) which is separated from the latter by a first dividing wall (40) provided with one throughflow aperture (42), and the exhaust inlet (14) comprises an inlet pipe (46) which is fastened in the upper housing section (22) and which from the outside of the housing (18) extends in through the forward end wall (32) of the upper housing section (22) and continues into the larger chamber (36) of the latter so as to be mainly parallel with the dividing wall (40) and situated at a distance from the walls of the chamber (36), and that the lower housing section (24) includes not only a larger chamber (56) situated beneath the larger chamber (36) of the upper housing section (22) but also a smaller chamber (58) which is separated from the larger chamber (56) by a second dividing wall (60) provided with one throughflow aperture (62) and is at the top in direct open communication with the smaller chamber (38) of the upper housing section (22), and the exhaust outlet (16) comprises an outlet pipe element (68) which is fastened in the lower housing section (24) and which from the outside of the housing (18) extends into the larger chamber (56) of the lower housing section (24) through the sidewall (70) of the housing section (24) on the side (34) of the housing (18) which faces towards the vehicle frame (2).

## Patentansprüche

1. Abgasschalldämpfer (10), der zur Verbindung mit einem Verbrennungsmotor vorgesehen ist und ein Gehäuse (18) mit einem Einlass (14) und einem Auslass (16) aufweist, dessen Gehäuse (18) aus zwei Gehäuseabschnitten (22, 24) zusammengesetzt ist, die im Wesentlichen gleich groß sind, wobei das Gehäuse (18) größtenteils die Form eines rechtwinkligen Blocks mit mehreren Kammern (36, 38, 56, 58) aufweist,
**dadurch gekennzeichnet, dass** einer der Gehäuseabschnitte (22, 24) von einer Basiskammer (36) teilweise besetzt ist und der andere von einer Höhenkammer (56) teilweise besetzt ist, und dass die restlichen Volumina der zwei Gehäuseabschnitte (22, 24) gemeinsam eine Mittenbereichkammer (38, 58) bilden, der Einlass (14) des Schalldämpfers in die Basiskammer (36) führt und dessen Auslass (16) von der Höhenkammer (56) nach außen führt.

2. Abgasschalldämpfer gemäß Anspruch 1,
**dadurch gekennzeichnet, dass** die Gehäuseabschnitte (22, 24) eine gemeinsame Verbindungsebene (30) aufweisen, die im Wesentlichen parallel zu der Abschlussebene des rechtwinkligen Blocks angeordnet ist.

3. Abgasschalldämpfer gemäß Anspruch 1 oder 2,
**dadurch gekennzeichnet, dass** der Einlass (14) in die Basiskammer (36) ein Rohr (46) mit einem offenen Rohrende (54) umfasst, das in die Basiskammer (36) abgibt, dessen Rohr (46) im Wesentlichen gerade durch die Basiskammer (36) für wenigstens die Hälfte der Länge der Letzteren verläuft.

4. Abgasschalldämpfer gemäß Anspruch 3,
**dadurch gekennzeichnet, dass** die Basiskammer (36) und die Mittenbereichkammer (38, 58) im Wesentlichen senkrecht zu dem Verlauf des Rohrs (46) und in der Nähe des Rohrendes (54) eine Durchflussapertur (42) aufweisen, die ein Rohrelement (44) umschließt, das durch eine den zuvor genannten Kammern (36, 38, 58) gemeinsamen Trennwand (14) verläuft, sich offensichtlich in die Mittenbereichkammer (38, 58) erstreckt und ausgerichtet oder nahezu ausgerichtet mit der Öffnung (54) des Einlassrohrs (46) angeordnet ist.

5. Abgasschalldämpfer gemäß Anspruch 1 oder 2,
**dadurch gekennzeichnet, dass** zwischen der Mittenbereichkammer (38, 58) und der Höhenkammer (56) eine Trennwand (60) mit einer Duchflussapertur (62) angeordnet ist, die von einem Rohrelement (72) gebildet ist, das einen im Wesentlichen rechteckigen Querschnitt aufweist und in die Trennwand (60) eingesetzt ist, und dass in der Höhenkammer (56) eine Flusspassage (74) angeordnet ist, die das Rohrelement (72) mit dem Auslassrohrelement (68) verbindet und aus einer Flussleitung mit einer perforierten Leitungswand, vorzugsweise aus Metallblech hergestellt, besteht, auf dessen Außenseite eine relativ dikke Schicht oder Beschichtung eines absorbierenden Materials (76), wie z.B. Glaswolle oder eine andere Mineralwolle, angeordnet ist, das die Leitung umgibt.

6. Abgasschalldämpfer gemäß Anspruch 5,
**dadurch gekennzeichnet, dass** das Rohrelement (72) von im Wesentlichen rechteckigen Querschnitt in die Trennwand (60) auf einem höheren Niveau als das Niveau eingesetzt ist, an dem das Auslassrohrelement (68) in der Seitenwand (70) des Schalldämpfers befestigt ist, und das Rohrelement (72) näherungsweise den gleichen Durchflussbereich wie das Auslassrohrelement (68) aufweist.

7. Abgasschalldämpfer gemäß Anspruch 1 oder 2,
**dadurch gekennzeichnet, dass** die Basiskammer (36) näherungsweise das gleiche Volumen wie das kombinierte Volumen der kleineren Kammern (38, 58) der unteren und oberen Gehäuseabschnitte (22, 24) aufweist, deren kleinere Kammern (38, 58) in unmittelbar offener Verbindung miteinander stehen und zusammen die Mittenbereichkammer in dem Schalldämpfergehäuse (18) bilden.

8. Abgasschalldämpfer gemäß Anspruch 2,
**dadurch gekennzeichnet, dass**
eine erste Trennwand (40) in einem ersten Gehäuseanschnitt (22) zwischen der Basiskammer (36) und einem ersten Teil (38) der Mittenbereichkammer (38, 58) angeordnet ist, und
eine zweite Trennwand (60) in einem zweiten Gehäuseabschnitt (24) zwischen der Höhenkammer (56) und einem zweiten Teil (58) der Mittenbereichkammer (38, 58) angeordnet ist, wobei sich die beiden genannten Trennwände (40, 60) in einer gemeinsamen Ebene senkrecht zu der gemeinsamen Verbindungsebene (30) der Gehäuseabschnitte (22, 24) befinden.

9. Kraftfahrzeug mit einem Fahrzeugrahmen (2), vorzugsweise einem getrennten Fahrzeugrahmen, an dem eine Antriebseinheit mit einem Verbrennungsmotor angebracht ist, der wenigstens einen Abgasauslass aufweist, der über eine erste Abgasleitung (8) mit dem Abgaseinlass (14) wenigstens eines Abgasschalldämpfers (10) gemäß Anspruch 1 in Verbindung steht, der einen Abgasauslass (16) aufweist, der ausgelegt ist, um mit der Umgebungsatmosphäre über wenigstens eine zweite Abgasleitung (12) in Verbindung zu stehen, wobei der Abgasschalldämpfer (10) das hohle Gehäuse (18) umfasst, das in dem Bereich des Fahrzeugrahmens (2) angeordnet ist, wobei ein Wandbereich des Schalldämpfergehäuses (18) längs einer vertikalen Seitenfläche (20) des Fahrzeugrahmens (2) liegt, die von der Längsachse des Rahmens (2) weg nach außen weist,
**dadurch gekennzeichnet, dass** die Basiskammer (36) zum Dämpfen der Abgasgeräuschfrequenzen in dem Basisbereich in dem ersten Gehäuseabschnitt (22), der das untere Gehäuse bildet, untergebracht ist, und die Höhenkammer (56) zum Dämpfen der Abgasgeräuschfrequenzen in dem Höhenbereich in dem zweiten Gehäuseabschnitt (24), der das unter dem oberen Gehäuse angeordnete untere Gehäuse bildet, untergebracht ist, wobei jede dieser Kammern (36, 56) mehr als die Hälfte des Volumens des oberen bzw. unteren Gehäuseabschnitts (22, 24) einnimmt, wobei die restlichen Volumina der zwei Gehäuseabschnitte (22, 24) zusammen die Mittenbereichkammer (38, 58) bilden.

10. Kraftfahrzeug gemäß Anspruch 9,
**dadurch gekennzeichnet, dass** das Abgasschalldämpfergehäuse (18) wenigstens näherungsweise kubisch ist und der untere Gehäuseabschnitt (24) in einer Verbindungsebene (30), die im Wesentlichen parallel zu und unterhalb einer unteren horizontalen Begrenzungsebene des Fahrzeugrahmens (2) liegt, mit dem oberen Gehäuseabschnitt (22) verbunden ist.

11. Kraftfahrzeug gemäß Anspruch 9 oder 10,
**dadurch gekennzeichnet, dass** die Höhenkammer (56) ein Auslassrohrelement (68) aufweist, das im Wesentlichen mittig auf dem unteren Teil des unteren Gehäuseabschnitts (24) liegt und schräg nach unten und nach innen zu dem Mittelpunkt des Fahrzeugs gerichtet ist.

12. Kraftfahrzeug gemäß Anspruch 9 oder 10,
**dadurch gekennzeichnet, dass** der Abgaseinlass (14) zu dem Abgasschalldämpfer (10) in dem oberen Abschnitt (22) des Schalldämpfergehäuses (18) in dem Bereich einer in Fahrtrichtung des Fahrzeugs gesehen vorderen Abschlusswand (32) des Gehäuses (18) angeordnet ist, während der Abgasauslass (16) von dem Abgasschalldämpfer (10) in dem unteren Abschnitt (24) des Schalldämpfergehäuses (18) an einer Seite (34) des Gehäuses (18) angeordnet ist, die zu dem Fahrzeugrahmen (2) weist.

13. Kraftfahrzeug gemäß Anspruch 10 oder 12,
**dadurch gekennzeichnet, dass** der obere Gehäuseabschnitt (22) eine größere Kammer (36) und eine kleinere Kammer (38) enthält, die von der Letzteren mittels einer ersten Trennwand (40) getrennt ist, die mit einer Durchflussapertur (42) ausgestattet ist, und der Abgaseinlass (14) ein Einlassrohr (46) umfasst, das in dem oberen Gehäuseabschnitt (22) befestigt ist und sich von der Außenseite des Gehäuses (18) durch die vordere Abschlusswand (32) des oberen Gehäuseabschnitts (22) nach Innen erstreckt und so in die größere Kammer (36) der Letzteren reicht, dass sie im Wesentlichen parallel mit der Trennwand (40) ist und in einem Abstand zu den Wänden der Kammer (36) liegt, und dass der untere Gehäuseabschnitt (24) nicht nur eine größere Kammer (56), die unter der größeren Kammer (36) des oberen Gehäuseabschnitts (22) liegt, sondern auch eine kleinere Kammer (58) umfasst, die von der größeren Kammer (56) mittels einer zweiten Trennwand (60) getrennt ist, die mit einer Durchflussapertur (62) ausgestattet ist, und an der Oberseite in unmittelbarer offener Verbindung mit der kleineren Kammer (38) des unteren Gehäuseabschnitts (22) steht, und der Abgasauslass (16) ein Auslassrohrelement (68) umfasst, das in dem unteren Gehäuseabschnitt (24) befestigt ist und sich von der Außenseite des Gehäuses (18) in die größere Kammer (56) des unteren Gehäuseabschnitts (24) durch die Seitenwand (70) des Gehäuseabschnitts (24) an der Seite (34) des Gehäuses (18) erstreckt, die zu dem Fahrzeugrahmen (2) weist.

## Revendications

1. Silencieux d'échappement (10) qui est destiné à être raccordé à un moteur à combustion et possède un boîtier (18) comprenant une entrée (14) et une sortie (16), lequel boîtier (18) se compose de deux sections de boîtier (22, 24) qui sont de tailles sensiblement égales et le boîtier (18) ayant en grande partie la forme d'un bloc à angles droits avec plusieurs chambres (36, 38, 56, 58),
**caractérisé en ce qu'**une des sections de boîtier (22, 24) est partiellement occupée par une chambre de base (36) et l'autre est partiellement occupée par une chambre d'aiguës (56) et **en ce que** les volumes restants des deux sections de boîtier (22, 24) forment ensemble une chambre médiane (38, 58), l'entrée (14) du silencieux mène dans la chambre de base (36) et sa sortie (16) mène hors de la chambre d'aiguës (56).

2. Silencieux d'échappement selon la revendication 1, **caractérisé en ce que** les sections de boîtier (22, 24) ont un plan d'accouplement commun (30) disposé sensiblement parallèle au plan d'extrémité du bloc à angles droits.

3. Silencieux d'échappement selon la revendication 1 ou 2, **caractérisé en ce que** l'entrée (14) dans la chambre de base (36) comprend une conduite (46) avec une extrémité de conduite (54) ouverte qui s'ouvre dans la chambre de base (36), laquelle conduite (46) s'étend sensiblement en ligne droite à travers la chambre de base (36) sur au moins la moitié de la longueur de cette dernière.

4. Silencieux d'échappement selon la revendication 3, **caractérisé en ce que** la chambre de base (36) et la chambre médiane (38, 58) ont une ouverture de passage d'écoulement (42) sensiblement perpendiculaire à la conduite (46) et à proximité de l'extrémité de la conduite (54), entourant un élément de conduite (44) qui traverse une paroi de séparation (40) commune aux chambres susmentionnées (36, 38, 58), dépasse manifestement dans la chambre médiane (38, 58) et est situé au même niveau ou presque au même niveau que l'orifice (54) de la conduite d'entrée (46).

5. Silencieux d'échappement selon la revendication 1 ou 2, **caractérisé en ce qu'**une paroi de séparation (60) est disposée entre la chambre médiane (38, 58) et la chambre d'aiguës (56), présentant une ouverture de passage d'écoulement (62) constituée par un élément de conduite (72) qui est de section transversale sensiblement rectangulaire et est introduit dans la paroi de séparation (60), et **en ce qu'**un passage d'écoulement (74) est disposé dans la chambre d'aiguës (56), qui relie l'élément de conduite (72) à l'élément de conduite de sortie (68) et se compose d'un conduit d'écoulement avec une paroi de conduit perforée, de préférence faite en métal en feuille, sur l'extérieur duquel est disposée une couche ou un revêtement relativement épais de matériau absorbant (76) tel que de la laine de verre ou une autre laine minérale, entourant le conduit.

6. Silencieux d'échappement selon la revendication 5, **caractérisé en ce que** l'élément de conduite (72) de section transversale sensiblement rectangulaire est introduit dans la paroi de séparation (60) à un niveau plus élevé que le niveau auquel l'élément de conduite de sortie (68) est fixé dans la paroi latérale (70) du silencieux, et **en ce que** l'élément de conduite (72) a approximativement la même surface de passage d'écoulement que l'élément de conduite de sortie (68).

7. Silencieux d'échappement selon la revendication 1 ou 2, **caractérisé en ce que** la chambre de base (36) a approximativement le même volume que le volume combiné des chambres plus petites (38, 58) des sections de boîtier supérieure et inférieure (22, 24), lesquelles chambres plus petites (38, 58) sont en communication ouverte directe entre elles et constituent ensemble la chambre médiane dans le boîtier de silencieux (18).

8. Silencieux d'échappement selon la revendication 2, **caractérisé en ce que**
une première paroi de séparation (40) est disposée dans une première section de boîtier (22) entre la chambre de base (36) et une première partie (38) de la chambre médiane (38, 58),
et une deuxième paroi de séparation (60) est disposée dans une deuxième section de boîtier (24) entre la chambre d'aiguës (56) et une deuxième partie (58) de la chambre médiane (38, 58),
lesdites deux parois de division (40, 60) étant dans un plan commun perpendiculaire au plan de raccordement commun (30) des sections de boîtier (22, 24).

9. Véhicule à moteur comprenant un châssis de véhicule (2), de préférence un châssis à longeron séparé, sur lequel est montée une unité motrice comprenant un moteur à combustion ayant au moins une sortie d'échappement qui communique par l'intermédiaire d'un premier conduit d'échappement (8) avec l'entrée d'échappement (14) d'au moins un silencieux d'échappement (10) selon la revendication 1 qui possède une sortie d'échappement (16) conçu pour communiquer avec l'atmosphère environnante par l'intermédiaire d'au moins un deuxième conduit de gaz d'échappement (12), le silencieux d'échappement (10) comprenant le boîtier creux (18) qui est disposé dans la zone du châssis du véhicule (2), un secteur de paroi du boîtier de silencieux (18) étant situé à côté et le long d'une surface latérale verticale (20) du châssis du véhicule (2), qui fait face vers l'extérieur par rapport à l'axe longitudinal du châssis (2)
**caractérisé en ce que**
la chambre de base (36) servant à atténuer les fréquences de bruit d'échappement dans la gamme basse est logée dans la première section de boîtier (22) qui est le boîtier supérieur et la chambre d'aiguës (56) servant à atténuer les fréquences de bruit d'échappement dans la gamme des aiguës est logée dans la deuxième section de boîtier (24) qui est le boîtier inférieur situé sous le boîtier supérieur, chacune de ces chambres (36, 56) occupe plus de la moitié du volume de la section de boîtier supérieure ou inférieure (22, 24), respectivement, les volumes restants des deux sections de boîtier (22, 24) forment ensemble la chambre médiane (38, 58).

10. Véhicule à moteur selon la revendication 9, **caractérisé en ce que** le boîtier de silencieux d'échappement (18) est au moins approximativement cubique et la section de boîtier inférieure (24) est reliée à la section de boîtier supérieure (22) à un plan de raccordement (30) qui est situé sensiblement parallèle à et au-dessous d'un plan horizontal de limite inférieure du châssis du véhicule (2).

11. Véhicule à moteur selon la revendication 9 ou 10, **caractérisé en ce que** la chambre d'aiguës (56) a un élément de conduite de sortie (68) disposé sensiblement de façon centrale sur la partie inférieure de la section de boîtier inférieure (24) et dirigé obliquement vers le bas et vers l'intérieur en direction du centre du véhicule.

12. Véhicule à moteur selon la revendication 9 ou 10, **caractérisé en ce que** l'entrée d'échappement (14) vers le silencieux d'échappement (10) est disposée dans la section supérieure (22) du boîtier de silencieux (18) dans la zone d'une paroi d'extrémité avant (32) du boîtier (18) vu dans la direction de l'avant du véhicule, tandis que la sortie d'échappement (16) du silencieux d'échappement (10) est disposée dans la section inférieure (24) du boîtier de silencieux (18) sur un côté (34) du boîtier (18) qui fait face au châssis de véhicule (2).

13. Véhicule à moteur selon la revendication 10 ou 12, **caractérisé en ce que** la section de boîtier supérieure (22) contient une chambre plus grande (36) et une chambre plus petite (38) qui est séparée de la première par une première paroi de séparation (40) pourvue d'une ouverture de passage d'écoulement (42) et **en ce que** l'entrée d'échappement (14) comprend une conduite d'entrée (46) qui est fixée dans la section de boîtier supérieure (22) et qui s'étend de l'extérieur du boîtier (18) à travers la paroi d'extrémité avant (32) de la section de boîtier supérieure (22) et se poursuit dans la chambre plus grande (36), de cette dernière de façon à être essentiellement parallèle à la paroi de séparation (40) et située à distance des parois de la chambre (36) et **en ce que** la section de boîtier inférieure (24) comprend non seulement une chambre plus grande (56) située sous la chambre plus grande (36) de la section de boîtier supérieure (22) mais également une chambre plus petite (58) qui est séparée de la chambre plus grande (56) par une deuxième paroi de séparation (60) pourvue d'une ouverture de passage d'écoulement (62) et est au sommet en communication ouverte directe avec la chambre plus petite (38) de la section de boîtier supérieure (22) et **en ce que** la sortie d'échappement (16) comprend un élément de conduite de sortie (68) qui est fixé dans la section de boîtier inférieure (24) et qui s'étend de l'extérieur du boîtier (18) dans la chambre plus grande (56) de la section de boîtier inférieure (24) à travers la paroi latérale (70) de la section de boîtier (24) sur le côté (34) du boîtier (18) qui fait face au châssis du véhicule (2).
